# EUROPEAN PATENT APPLICATION

(11) **EP 4 597 201 A1**
(43) Date of publication of application: **06.08.2025**
(21) Application number: 22967301.7
(22) Date of filing: 01.12.2022
(51) Int. Cl.: G02B 27/01, G02B 27/09

(54) **HEAD-UP DISPLAY**

(71) Applicant: LG Electronics Inc., Yeongdeungpo-gu Seoul 07336 (KR)
(72) Inventor: LEE, Bosun, Seoul 06772 (KR); KIM, Dongwook, Seoul 06772 (KR); AHN, Jisun, Seoul 06772 (KR)
(74) Representative: Vossius & Partner Patentanwälte Rechtsanwälte mbB
(86) International application number: PCT/KR2022/019428
(87) International publication number: WO 2024/117326

(57) **Abstract**

The present embodiment may comprise: an image generation device emitting image light; a first flat mirror reflecting image light emitted from the image generation device toward a windshield; and a holographic optical element displayed between the first flat mirror and the windshield and spaced apart from the first flat mirror and the windshield.

## Description

### TECHNICAL FIELD

The present invention relates to a head-up display that is capable of being installed in a vehicle.

### BACKGROUND ART

A head-up display may be a device provided in a vehicle to emit image light to a windshield of the vehicle. The head-up display may display various information including driving information during the driving of the vehicle.

The head-up display includes a display panel generating and outputting image light and at least one mirror reflecting the image light generated by the display panel.

The image light generated by the display panel may be incident into the windshield of the vehicle by the mirror, and a driver may recognize a virtual image in the front of the windshield.

A test device for a head-up display using a holographic optical element, in which laser beam emitted from a light source is irradiated on the holographic optical element attached to a windshield to appear a virtual image is disclosed in Korean Patent Publication No. 10-2433513 B1 (published on August 18, 2022).

### DISCLOSURE OF THE INVENTION

### TECHNICAL PROBLEM

The present embodiment provides a head-up display that does not require attachment of a holographic optical element to a windshield and is capable of being minimized in volume because the head-up display don't use a concave mirror.

### TECHNICAL SOLUTION

A head-up display according to the present embodiment may comprise: an image generation device configured to emit image light; a first flat mirror configured to reflect the image light emitted from the image generation device toward a windshield; and a holographic optical element disposed to be spaced apart from the first flat mirror and the windshield between the first flat mirror and the windshield.

The holographic optical element may be tilted at a set angle or more in a direction of the windshield.

The set angle may range of 5° to 15°.

The head-up display may further comprise a second flat mirror disposed to be spaced apart from the first flat mirror and configured to reflect the image light emitted from the image generation device toward the holographic optical element.

A size of the second flat mirror may be less than a size of the first flat mirror.

A first distance between the second flat mirror and the image generation device may be less than a second distance between the first flat mirror and the image generation device.

A third distance between the second flat mirror and the holographic optical element may be less than a fourth distance between the first flat mirror and the holographic optical element.

The head-up display may further comprise: a retarder disposed to face a portion of an emission surface of the image generation device; and a selective reflection element disposed to be spaced apart from the first flat mirror and configured to reflect image light emitted from the retarder toward the holographic optical element.

The first flat mirror may be provided in plurality to be spaced apart from each other, and a plurality of first flat mirrors may be configured to sequentially reflect the image light.

### ADVANTAGEOUS EFFECTS

According to the present embodiment, the volume may be minimized due to the simple structures of the holographic optical element spaced apart from the windshield and the first flat mirror compared to the case in which the concave mirror is applied.

In addition, the holographic optical element may be disposed to be tilted at an angle of 10° or more, thereby minimizing the internal reflections due to the sunlight.

### BRIEF DESCRIPTION OF THE DRAWINGS

FIG. 1 is a side view illustrating an example of a head-up display according to the present embodiment,
FIG. 2 is a side view illustrating another example of the head-up display according to the present embodiment,
FIG. 3 is a side view illustrating a first modified example of the head-up display according to the present embodiment, and
FIG. 4 is a side view illustrating a second modified example of the head-up display according to the present embodiment.

### MODE FOR CARRYING OUT THE INVENTION

Hereinafter, detailed embodiments will be described in detail with reference to the accompanying drawings.

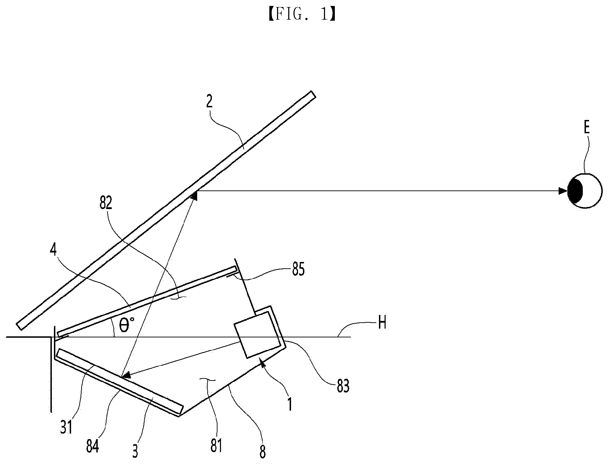

FIG. 1 is a side view illustrating an example of a head-up display according to the present embodiment.

An example of a head-up display may include: an image generation device 1 that emits image light; a first flat mirror 3 that reflects the image light emitted from the image generation device 1 toward a windshield 2; and a holographic optical element (HOE) 4 that is disposed to be spaced apart from the first flat mirror 3 and the windshield 2 between the first flat mirror 3 and the windshield 2.

An image generation device 1 (e.g., a picture generation unit (PGU)) may include a light source such as an LED and a display panel such as an LCD. The image generation device 1 may include at least one lens disposed between the light source and the display panel.

In the image generation device 1, the display panel or the plurality of lenses may include a polarizing plate or a polarizing sheet, and a polarized image having a P wave or S wave may be emitted from the image generation device 1.

The windshield 2 may be a windshield of a vehicle, and a driver E (eye box) may recognize a virtual image formed in front of the windshield 2 through the windshield 2.

The first flat mirror 3 may be disposed at a lower side of the windshield 2 so as to be spaced apart from the windshield 2 in a vertical direction. The first flat mirror 3 may have a reflective surface 31 disposed on a rear surface and may reflect the image light in a tilted direction that is directed approximately toward a rear upper side.

The holographic optical element 4 may be disposed above the first flat mirror 3, cover the first flat mirror 3, and magnify the image light reflected from the first flat mirror 4.

The holographic optical element 4 may be a holographic optical element (HOE), and examples of the holographic optical element 4 may be an HOE glass or an HOE film.

The holographic optical element 4 may be tilted by a set angle θ° or more in the direction of the windshield 2.

The set angle θ° may be 5° to 15°, an example of the set angle θ° may be 10°, and the holographic optical element 4 may be disposed to be tilted by 10° or more in the direction of the windshield 2.

The holographic optical element 4 may be disposed to be tilted at a tilt angle of 10° or more with respect to a horizontal plane H. The holographic optical element 4 may be disposed to be tilted at an angle of 10° or more, may be used like a lens, may minimize back-reflection due to sunlight.

An example of the head-up display may have an optical path leading to the image generation device 1 to the first flat mirror 3, the holographic optical element 4, and the windshield 2.

The image light generated from the image generation device 1 may be reflected by the first flat mirror 3 to the holographic optical element 4, enlarged by the holographic optical element 4, and directed toward the windshield 2, and thus, the driver E (eye box) may recognize the virtual image formed in front of the windshield 2 through the windshield 2.

An example of the head-up display may include a housing 8 (or case) that defines an outer appearance of the head-up display.

A space 81 may be defined inside the housing 8. An opening 82 may be defined in an upper portion of the housing 8.

The image generation device 1 and the first flat mirror 3 may be accommodated in the space.

The holographic optical element 4 may be disposed in the opening 82 or may be disposed to cover the opening 82. The holographic optical element 4 may cover the space 81 and prevent dust and the like from being penetrated into the space 81.

The housing 8 may include an image generation device holder 83 to which the image generation device 1 is fixed, and a mirror holder 84 to which the first flat mirror 3 is fixed. The housing 8 may include an optical element supporter 85 that supports the holographic optical element 4.

The optical element supporter 85 may be disposed in the opening 82 or around the opening 82.

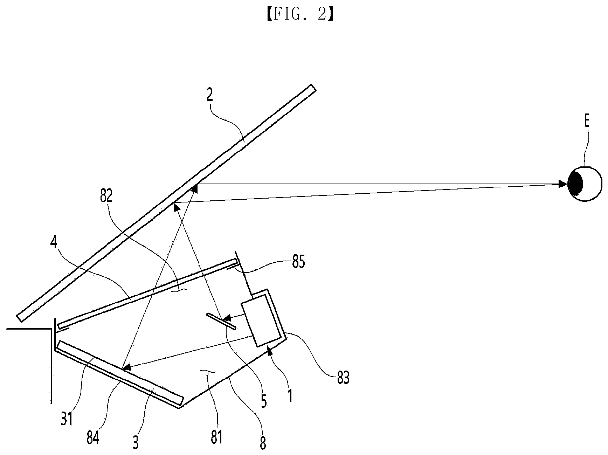

FIG. 2 is a side view illustrating an example of the head-up display according to the present embodiment.

Another example of the head-up display, as illustrated in FIG. 2, may include: an image generation device 1; a first flat mirror 3 that reflects image light emitted from the image generation device 1 toward a windshield 2; and a holographic optical element (HOE) 4 that is disposed to be spaced apart from the first flat mirror 3 and the windshield 2 between the first flat mirror 3 and the windshield 2 and may further include a second flat mirror 5.

The image generation device 1, the windshield 2, the first flat mirror 3, and the holographic optical element 4 may be the same as the example of the head-up display illustrated in FIG. 1. Hereinafter, the same symbols are used to avoid duplicated descriptions, and detailed descriptions thereof are omitted.

The second flat mirror 5 may be disposed to be spaced apart from the first flat mirror 3. The second flat mirror 5 may reflect the image light emitted from the image generation device 1 toward the holographic optical element 4.

The holographic optical element 4 may be disposed above the first flat mirror 3 and the second flat mirror 5 to cover the first flat mirror 3 and the second flat mirror 5.

A height of the second flat mirror 5 may be lower than a height of the holographic optical element (HOE) 4.

A size of the second flat mirror 5 may be smaller than a size of the first flat mirror 3.

The second flat mirror 5 may be closer to the image generation device 1 than the first flat mirror 3. A first distance between the second flat mirror 5 and the image generation device 1 may be shorter than a second distance between the first flat mirror 3 and the image generation device 1.

A third distance between the second flat mirror 5 and the holographic optical element 4 may be shorter than a fourth distance between the first flat mirror and the holographic optical element 4.

The first distance L1 may be the shortest distance between the second flat mirror 5 and the image generation device 1, and the second distance L2 may be the shortest distance between the first flat mirror 3 and the image generation device 1.

The third distance L3 may be the shortest distance between the second flat mirror 5 and the holographic optical element 4, and the fourth distance L4 may be the shortest distance between the first flat mirror 3 and the holographic optical element 4.

Another example of the head-up display may have a first optical path leading to the image generation device 1, the first flat mirror 3, the holographic optical element 4, and the windshield 2, and a second optical path leading to the image generation device 1, the second flat mirror 5, the holographic optical element 4, and the windshield 2. The first optical path and the second optical path may have a path difference. Since the second flat mirror 5 is closer to the image generation device 1 than the first flat mirror 3, the second optical path may be shorter than the first optical path.

A portion of the image light emitted from the image generation device 1 may be reflected by the first flat mirror 3 to the holographic optical element 4 and may be magnified by the holographic optical element 4 and then be directed toward the windshield 2.

Another portion of the image light emitted from the image generation device 1 may be reflected by the second flat mirror 5 to the holographic optical element 4 and may be magnified by the holographic optical element 4 and then be directed toward the windshield 2.

In another example of the head-up display, two virtual images having different distances may be formed in front of the windshield 2 by the path difference, and the driver E (eye box) may recognize the two virtual images having different distances formed in front of the windshield 2 through the windshield 2.

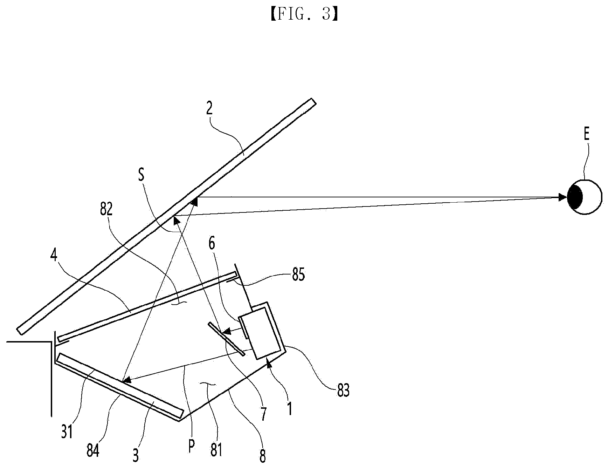

FIG. 3 is a side view illustrating a first modified example of the head-up display according to the present embodiment.

A first modified example of the head-up display may include: an image generation device 1; a first flat mirror 3 that reflects image light emitted from the image generation device 1 toward a windshield 2; and a holographic optical element (HOE) 4 disposed to be spaced apart from the first flat mirror 3 and the windshield 2 between the first flat mirror 3 and the windshield 2, and may further include a retarder 6 and a selective reflective element 7.

The image generation device 1, the windshield 2, the first flat mirror 3, and the holographic optical element 4 may be the same as another example of the head-up display illustrated in FIG. 2. Hereinafter, the same symbols are used to avoid duplicated descriptions, and detailed descriptions thereof are omitted.

The retarder 6 may be disposed to face a portion of an emission surface of the image generation device 1. The retarder 6 may be a phase delayer that converts a phase of the image light emitted from the image generation device 1. An example of the retarder 6 may be a half wave plate (HWP), which is capable of converting the phase of the image light emitted from the image generation device 1 by half a wavelength.

For example, when the image light emitted from the image generation device 1 has a P wave, image light having an S wave may be emitted from the retarder 6. In the case of the S-wave image light emitted from the image generation device 1, the P-wave image light may be emitted from the retarder 6.

The retarder 6 may be disposed close to the emission surface of the image generation device 1.

The selective reflective element 7 may be disposed to be spaced apart from the first flat mirror 3. The selective reflective element 7 may reflect the image light emitted from the retarder 6 toward the holographic optical element 4. The selective reflection element 7 may selectively transmit and reflect the image light having the P wave and the image light having the S wave. The selective reflective element 7 may receive the image light which is emitted from the retarder 6 and the image light emitted from the image generation device 1 and does not pass through the retarder 6.

The selective reflective element 7 may reflect the image light emitted from the retarder 6 and transmit the image light which is emitted from the image generation device 1 and does not pass through the retarder 6.

An example of the selective reflective element 7 may be a polarizing reflective mirror, which is capable of reflecting light in a first direction and transmitting light in a second direction orthogonal to the first direction.

For example, when the image light emitted from the image generation device 1 is the image light having the P wave, the image light having the S wave may be emitted from the retarder 6, and the selective reflection element 7 may reflect the image light having the S wave to the holographic optical element 4 and allow the image light having the P wave to be transmitted. The image light having the P wave passing through the selective reflection element 7 may be reflected to the holographic optical element 4 by the first flat mirror 3.

Conversely, when the image light emitted from the image generation device 1 is the image light having the S wave, the image light having the P wave may be emitted from the retarder 6, and the selective reflection element 7 may reflect the image light having the P wave to the holographic optical element 4 and allow the image light having the S wave to be transmitted. The image light having the S wave passing through the selective reflection element 7 may be reflected to the holographic optical element 4 by the first flat mirror 3.

A height of the selective reflective element 7 may be lower than a height of the holographic optical element (HOE) 4.

A size of the selective reflective element 7 may be smaller than a size of the first flat mirror 3. The size of the selective reflective element 7 may be larger than a size of the second flat mirror 5 illustrated in FIG. 2.

The selective reflective element 7 may be closer to the image generation device 1 than the first flat mirror 3. A fifth distance between the selective reflective element 7 and the image generation device 1 may be shorter than a second distance between the first flat mirror 3 and the image generation device 1.

A sixth distance between the selective reflective element 7 and the holographic optical element 4 may be shorter than a fourth distance L4 between the first flat mirror 3 and the holographic optical element 4.

The fifth distance may be the shortest distance between the selective reflective element 7 and the image generation device 1.

The sixth distance may be the shortest distance between the selective reflective element 7 and the holographic optical element 4.

The first modified example of the head-up display may have a third optical path leading to the image generation device 1, the selective reflective element 7, the first flat mirror 3, the holographic optical element 4, and a windshield 2, and a fourth optical path leading to the image generation device 1, the retarder 6, the selective reflective element 7, the holographic optical element 4, and the windshield 2.

The third optical path and the fourth optical path may have a path difference. Since the selective reflective element 7 is closer to the image generation device 1 than the first flat mirror 3, the fourth optical path may be shorter than the third optical path.

A portion P of the image light emitted from the image generation device 1 may be reflected by the first flat mirror 3 to the holographic optical element 4 after passing through the selective reflection element 7, and may be magnified by the holographic optical element 4 and then be directed toward the windshield 2.

Another portion S of the image light emitted from the image generation device 1 may be phase-shifted by the retarder 6 and then be reflected by the selective reflective element 7 to the holographic optical element 4 and be magnified by the holographic optical element 4 and be directed toward the windshield 2.

In the first modified example of the head-up display, two virtual images having different distances may be formed in front of the windshield 2 by the path difference, and the driver (eye box) may recognize the two virtual images having different distances formed in front of the windshield 2 through the windshield 2.

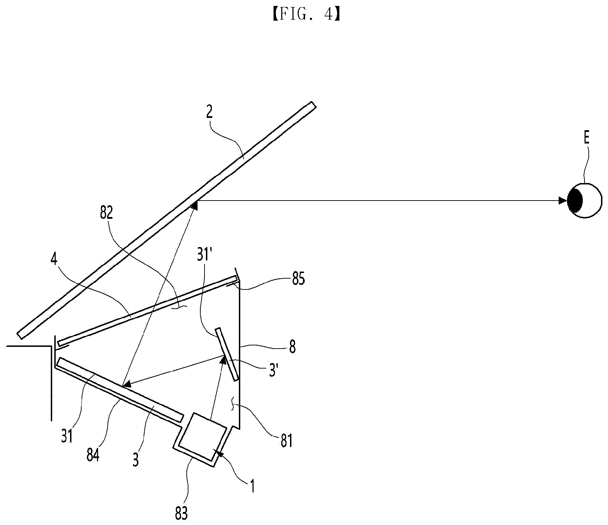

FIG. 4 is a side view illustrating a second modified example of the head-up display according to the present embodiment.

A second modified example of the head-up display may include: an image generation device 1; a first flat mirror that reflects image light emitted from the image generation device 1 toward a windshield 2; and a holographic optical element (HOE) 4 disposed to be spaced apart from the first flat mirror and arranged between the first flat mirror and the windshield 2, wherein a plurality of first flat mirrors 3 and 3' are disposed to be spaced apart from each other, and the plurality of first flat mirrors 3 and 3' may sequentially reflect the image light.

The image generation device 1, the windshield 2, and the holographic optical element 4 may be the same as the example of the head-up display illustrated in FIG. 1. Hereinafter, the same symbols are used to avoid duplicated descriptions, and detailed descriptions thereof are omitted.

The plurality of first flat mirrors 3 and 3' may be a pair of first flat mirrors 3 and 3'.

Each of the pair of first flat mirrors 3 and 3' may be disposed to be tilted. One 3 of the pair of first flat mirrors 3 and 3' may be disposed to be tilted close to a horizontal plane, and the other 3' of the pair of first flat mirrors 3 and 3' may be disposed to be tilted close to a vertical plane.

One 3 of the pair of first flat mirrors 3 and 3' may have a reflective surface 31 on a rear surface (or top surface), and the other 4 of the pair of first flat mirrors 3 and 3' may have a reflective surface 31' on a front surface (or bottom surface).

The pair of first flat mirrors 3 and 3' may have different center heights. A height of one 3 of the pair of first flat mirrors 3 and 3' may be lower than a height of the other 3' of the pair of first flat mirrors 3 and 3'.

A height of the image generation device 1 may be lower than the height of one 3 of the pair of first flat mirrors 3 and 3'. The height of the image generation device 1 may be lower than the height of the other one 3' of the pair of first flat mirrors 3 and 3'.

The image light emitted from the image generation device 1 may be reflected to one 3' of the pair of first flat mirrors 3 and 3' by the other 3' of the pair of first flat mirrors 3 and 3', and the image light reflected by one 3' of the pair of first flat mirrors 3 and 3' may be magnified by the holographic optical element 4 and then be directed toward the windshield 2.

In the second modified example of the head-up display, the image generation device 1 may be disposed at a lower side of the head-up display, particularly at an inner lower side of the housing 8.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

## Claims

1. A head-up display comprising:
an image generation device configured to emit image light;
a first flat mirror configured to reflect the image light emitted from the image generation device toward a windshield; and
a holographic optical element disposed to be spaced apart from the first flat mirror and the windshield between the first flat mirror and the windshield.

2. The head-up display according to claim **1,** wherein the holographic optical element is tilted at a set angle or more in a direction of the windshield.

3. The head-up display according to claim 1, wherein the set angle ranges of 5° to 15°.

4. The head-up display according to claim 1, further comprising a second flat mirror disposed to be spaced apart from the first flat mirror and configured to reflect the image light emitted from the image generation device toward the holographic optical element.

5. The head-up display according to claim 1, wherein a size of the second flat mirror is less than a size of the first flat mirror.

6. The head-up display according to claim 1, wherein a first distance between the second flat mirror and the image generation device is less than a second distance between the first flat mirror and the image generation device.

7. The head-up display according to claim 6, wherein a third distance between the second flat mirror and the holographic optical element is less than a fourth distance between the first flat mirror and the holographic optical element.

8. The head-up display according to claim 1, further comprising:
a retarder disposed to face a portion of an emission surface of the image generation device; and
a selective reflection element disposed to be spaced apart from the first flat mirror and configured to reflect image light emitted from the retarder toward the holographic optical element.

9. The head-up display according to claim 1, wherein the first flat mirror is provided in plurality to be spaced apart from each other, and
a plurality of first flat mirrors are configured to sequentially reflect the image light.
